# EUROPÄISCHE PATENTSCHRIFT

(11) **EP 3 251 922 B1**
(45) Veröffentlichungstag und Bekanntmachung des Hinweises auf die Patenterteilung: **23.10.2019**
(21) Anmeldenummer: 17170436.4
(22) Anmeldetag: 10.05.2017
(51) Int. Cl.: B62D 15/02, G08G 1/16

(54) **VERFAHREN ZUM AUTONOMEN EINPARKEN EINES KRAFTFAHRZEUGS IN EINE PARKLÜCKE MIT AUSGABE EINES AUSSTIEGSSIGNALS AN DEN FAHRER, FAHRERASSISTENZSYSTEM SOWIE KRAFTFAHRZEUG**
METHOD FOR AUTONOMOUS PARKING OF A MOTOR VEHICLE INTO A PARKING SPACE WITH OUTPUT OF AN EXIT SIGNAL TO THE DRIVER, DRIVER ASSISTANCE SYSTEM AND MOTOR VEHICLE
PROCÉDÉ DESTINÉ AU STATIONNEMENT AUTOMATIQUE D'UN VÉHICULE AUTOMOBILE SUR UNE PLACE DE STATIONNEMENT AVEC ÉMISSION D'UN SIGNAL DE DESCENTE À UN CONDUCTEUR, SYSTÈME D'ASSISTANCE AU CONDUCTEUR ET VÉHICULE AUTOMOBILE

(30) Priorität: 30.05.2016 DE 102016109851
(43) Veröffentlichungstag der Anmeldung: 06.12.2017
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)
(74) Vertreter: Pothmann, Karsten

(56) Entgegenhaltungen:
- EP-A2- 2 689 991
- WO-A1-2011/132309
- WO-A1-2013/041337
- WO-A1-2014/023411
- DE-A1-102012 201 902
- DE-A1-102013 207 369
- DE-A1-102013 217 071
- DE-A1-102014 013 692

## Beschreibung

Die vorliegende Erfindung betrifft ein Verfahren zum autonomen Einparken eines Kraftfahrzeugs in eine Parklücke, bei welchem, während das Kraftfahrzeug auf einer an die Parklücke angrenzenden Fahrbahn in Richtung der Parklücke bewegt wird, anhand von Sensordaten zumindest eines Sensors des Kraftfahrzeugs die Parklücke erkannt wird und das Kraftfahrzeug autonom in die Parklücke eingeparkt wird, nachdem ein Fahrer des Kraftfahrzeugs das Kraftfahrzeug verlassen hat. Darüber hinaus betrifft die vorliegende Erfindung ein Fahrerassistenzsystem für ein Kraftfahrzeug. Schließlich betrifft die vorliegende Erfindung ein Kraftfahrzeug.

Aus dem Stand der Technik sind Fahrerassistenzsysteme bekannt, welche den Fahrer beim Einparken des Kraftfahrzeugs in eine Parklücke unterstützen. Hierbei wird auf Grundlage von Sensordaten von Sensoren des Kraftfahrzeugs eine Parklücke erkannt und vermessen. Falls die erkannte Parklücke für das Kraftfahrzeug geeignet ist, kann dann das Kraftfahrzeug mithilfe des Fahrerassistenzsystems zumindest semi-autonom in die Parklücke eingeparkt werden. Zu diesem Zweck kann mit dem Fahrerassistenzsystem eine Einparktrajektorie bestimmt werden, welche sich von einem Startpunkt zu einem Zielpunkt innerhalb der Parklücke erstreckt. Dabei kann das Fahrerassistenzsystem in die Lenkung eingreifen und das Kraftfahrzeug entlang der geplanten Einparktrajektorie lenken. Dem Fahrer des Kraftfahrzeugs bleibt es weiterhin zugeteilt, das Gaspedal und die Bremse zu betätigen. Das Interesse richtet sich vorliegend auf Fahrerassistenzsysteme, welche ein autonomes beziehungsweise vollautonomes Einparken des Kraftfahrzeugs in die Parklücke ermöglichen. Hierbei übernimmt das Fahrerassistenzsystem neben dem Eingriff in die Lenkung auch einen Eingriff in den Antriebsmotor und die Bremse, um das Kraftfahrzeug entlang der Einparktrajektorie zu manövrieren.

Aus dem Stand der Technik sind ferner Fahrerassistenzsysteme bekannt, welche ein ferngesteuertes Einparken des Kraftfahrzeugs in eine Parklücke ermöglichen. Hierbei kann der Fahrer zunächst das Kraftfahrzeug verlassen und das Kraftfahrzeug wird anschließend autonom in die Parklücke gelenkt. Dabei kann der Fahrer des Kraftfahrzeugs den Einparkvorgang mithilfe eines mobilen Endgeräts, beispielsweise mit einem Smartphone oder Fahrzeugschlüssel, steuern. Ein solches Verfahren eignet sich insbesondere dann, wenn das Kraftfahrzeug in eine verhältnismäßig enge Parklücke eingeparkt werden soll, bei welcher dem Fahrer das Aussteigen aus dem Kraftfahrzeug aufgrund des geringen Platzbedarfs erschwert ist.

In diesem Zusammenhang beschreibt die WO 2013/041337 A1 ein Verfahren zum autonomen Rangieren eines Fahrzeugs, bei welchem sich ein Fahrer des Fahrzeugs während des Rangierens außerhalb des Kraftfahrzeugs positioniert. Die Aktivierung des Rangiervorgangs durch den Fahrer erfolgt beispielsweise über einen elektronischen Schlüssel oder ein Mobiltelefon. Während des Rangiervorgangs wird die Position des Fahrers mithilfe einer Detektionseinrichtung erfasst. Dabei ist es ferner vorgesehen, dass der Rangiervorgang zumindest dann unterbrochen wird, wenn sich der Fahrer außerhalb eines Bildbereichs eines mit der Detektionseinrichtung aufgenommenen Bilds befindet.

Das Dokument DE 10 2012 201 902 A1 offenbart ein Verfahren zum autonomen Einparken eines Kraftfahrzeugs in eine Parklücke gemäß dem Oberbegriff des Anspruchs 1.

Das Dokument WO 2014/023411 A1 offenbart ein anderes Verfahren zum autonomen Einparken eines Kraftfahrzeugs in eine Parklücke.

Es ist Aufgabe der vorliegenden Erfindung, eine Lösung aufzuzeigen, wie ein autonomer Einparkvorgang, während dem sich der Fahrer außerhalb des Kraftfahrzeugs befindet, effizienter durchgeführt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum autonomen Einparken eines Kraftfahrzeugs in eine Parklücke wird, während das Kraftfahrzeug auf einer an die Parklücke angrenzenden Fahrbahn in Richtung der Parklücke bewegt wird, anhand von Sensordaten zumindest eines Sensors des Kraftfahrzeugs die Parklücke erkannt. Des Weiteren wird das Kraftfahrzeug bevorzugt autonom in die Parklücke eingeparkt, nachdem ein Fahrer des Kraftfahrzeugs das Kraftfahrzeug verlassen hat. Des Weiteren ist es bevorzugt vorgesehen, dass mit dem zumindest einen Sensor die Parklücke in Vorwärtsfahrtrichtung vor dem Kraftfahrzeug erkannt wird und, sobald die Parklücke erkannt ist, ein Ausstiegssignal an den Fahrer des Kraftfahrzeugs ausgegeben wird, welches den Fahrer auffordert, das Kraftfahrzeug zu verlassen.

Ein erfindungsgemäßes Verfahren dient zum autonomen Einparken eines Kraftfahrzeugs in eine Parklücke. Hierbei wird, während das Kraftfahrzeug auf einer an die Parklücke angrenzenden Fahrbahn in Richtung der Parklücke bewegt wird, anhand von Sensordaten zumindest eines Sensors des Kraftfahrzeugs die Parklücke erkannt. Ferner wird das Kraftfahrzeug autonom in die Parklücke eingeparkt, nachdem ein Fahrer des Kraftfahrzeugs das Kraftfahrzeug verlassen hat. Des Weiteren wird mit dem zumindest einen Sensor die Parklücke in Vorwärtsfahrtrichtung vor dem Kraftfahrzeug erkannt und, sobald die Parklücke erkannt ist, wird ein Ausstiegssignal an den Fahrer des Kraftfahrzeugs ausgegeben, welches den Fahrer auffordert, das Kraftfahrzeug zu verlassen.

Mithilfe des Verfahrens soll das Kraftfahrzeug vollautonom in eine Parklücke eingeparkt werden. Das Verfahren kann mit einem entsprechenden Fahrerassistenzsystem des Kraftfahrzeugs durchgeführt werden. Dabei kann das Fahrerassistenzsystem in einen entsprechenden Einparkmodus überführt werden, um das Verfahren durchzuführen. Zunächst wird die Parklücke erkannt, welche zum Einparken des Kraftfahrzeugs geeignet ist. Mit dem zumindest einem Sensor des Kraftfahrzeugs werden Sensordaten bereitgestellt, welche die Umgebung des Kraftfahrzeugs beschreiben. Dabei beschreiben die Sensordaten die Parklücke oder Objekte, welche die Parklücke begrenzen. Auf Grundlage der Sensordaten kann nun beispielsweise mithilfe eines elektronischen Steuergeräts des Fahrerassistenzsystems überprüft werden, ob die Abmessungen der Parklücke ausreichend sind, um das Kraftfahrzeug in diese einparken zu können. Darüber hinaus kann mit dem Steuergerät eine Einparktrajektorie zum Einparken des Kraftfahrzeugs bestimmt werden. Dabei ist es vorgesehen, dass der Fahrer das Kraftfahrzeug zunächst verlässt beziehungsweise zunächst aus dem Kraftfahrzeug aussteigt und das Kraftfahrzeug anschließend autonom in die Parklücke manövriert wird.

Dabei ist es erfindungsgemäß vorgesehen, dass die Parklücke mit dem zumindest einen Sensor in Vorwärtsfahrtrichtung des Kraftfahrzeugs vor dem Kraftfahrzeug erkannt wird. Das Kraftfahrzeug wird auf einer Fahrbahn beziehungsweise Fahrspur bewegt, welche an die Parklücke angrenzt. Dabei ist es insbesondere vorgesehen, dass diese Parklücke bereits erkannt wird, bevor das Kraftfahrzeug an der Parklücke vorbeibewegt wird. Zu diesem Zweck kann der zumindest eine Sensor des Kraftfahrzeugs beispielsweise als Laserscanner oder als Kamera ausgebildet sein, wobei mit dem Sensor ein Erfassungsbereich in Vorwärtsfahrtrichtung vor dem Kraftfahrzeug erfasst werden kann. Derartige Sensoren eignen sich dazu, die Parklücke zu vermessen beziehungsweise zu erkennen, ohne dass das Kraftfahrzeug an der Parklücke vorbeibewegt werden muss. Sobald die Parklücke erkannt wurde, kann an den Fahrer des Kraftfahrzeugs das Ausstiegssignal ausgegeben werden. Dieses Ausstiegssignal kann beispielsweise optisch, akustisch und/oder haptisch ausgegeben werden. Dieses Ausstiegssignal weist den Fahrer darauf hin, dass ein Verlassen des Kraftfahrzeugs möglich ist und das Kraftfahrzeug nach dem Verlassen autonom in die Parklücke eingeparkt werden kann. Das Ausstiegssignal kann insbesondere dann, wenn dieses optisch dargestellt wird, weitere Informationen zu der Lage der Parklücke umfassen. Dadurch wird es ermöglicht, dass das Ausstiegssignal bereits ausgegeben wird, bevor das Kraftfahrzeug an der Parklücke vorbeibewegt wurde. Insbesondere, wenn das Kraftfahrzeug rückwärts in die Parklücke eingeparkt werden soll, können somit von dem Fahrer beziehungsweise von dem Fahrerassistenzsystem frühzeitig Schritte zum Starten des autonomen Einparkvorgangs eingeleitet werden. Damit kann der autonome Einparkvorgang rechtzeitig gestartet werden und somit kann beispielsweise verhindert werden, dass ein nachfolgendes Fahrzeug dem Kraftfahrzeug die Einfahrt in die Parklücke blockiert. Durch das frühzeitige Erkennen der Parklücke und der Ausgabe des Ausstiegssignals kann der Einparkvorgang auch innerhalb einer verhältnismäßig geringen zeitlichen Dauer erfolgen, wodurch beispielsweise Auffahrunfälle verhindert werden können. Somit kann insgesamt ein effizientes autonomes Einparkmanöver ermöglicht werden.

Bevorzugt wird das Kraftfahrzeug an einer Ausstiegsposition zum Verlassen angehalten, wobei sich die Ausstiegsposition auf der Fahrbahn und in Vorwärtsfahrtrichtung des Kraftfahrzeugs vor der Parklücke oder seitlich neben der Parklücke befindet. Wenn nach dem Erkennen der Parklücke das Ausstiegssignal an den Fahrer ausgegeben wird, kann dieser beispielsweise eine entsprechende Bedieneingabe tätigen, infolge der das autonome Einparkmanöver gestartet wird. Es kann auch der Fall sein, dass das Kraftfahrzeug mittels des Fahrerassistenzsystems autonom an der Ausstiegsposition angehalten wird. Mithilfe des Fahrerassistenzsystems kann also die Geschwindigkeit des Kraftfahrzeugs verringert werden, sodass sich das Kraftfahrzeug an der Ausstiegsposition im Stillstand befindet. Sobald die Ausstiegsposition erreicht ist, kann der Fahrer aus dem Kraftfahrzeug aussteigen. Dabei wird die Ausstiegsposition, an welcher das Kraftfahrzeug angehalten wird, derart bestimmt, dass sich das Kraftfahrzeug an der Ausstiegsposition in Vorwärtsfahrtrichtung des Kraftfahrzeugs vor der Parklücke und/oder seitlich neben der Parklücke befindet. Dadurch, dass das Kraftfahrzeug angehalten wird, bevor es an der Parklücke vorbeigefahren ist, kann verhindert werden, dass nachfolgende Verkehrsteilnehmer die Einfahrt des Kraftfahrzeugs in die Parklücke blockieren. Somit kann im Vergleich zu bekannten Einparkverfahren, bei denen das Kraftfahrzeug zunächst vollständig an der Parklücke vorbeibewegt wird und beispielsweise anschließend rückwärts in die Parklücke bewegt wird, ein effizienteres Einparkmanöver ermöglicht werden. Ferner kann verhindert werden, dass das autonome Einparkmanöver abgebrochen wird, weil ein nachfolgender Verkehrsteilnehmer die Einfahrt in die Parklücke blockiert.

In einer weiteren Ausgestaltung wird nachdem der Fahrer das Kraftfahrzeug verlassen hat eine Position des Fahrers erfasst und das Kraftfahrzeug wird autonom in die Parklücke eingeparkt, falls sich die Position des Fahrers in einem vorbestimmten Blockierbereich auf der Fahrbahn befindet. Mit dem Fahrerassistenzsystem kann zunächst bestimmt werden, ob der Fahrer das Kraftfahrzeug an der Ausstiegsposition verlassen hat. Hierzu können Signale eines Sensors herangezogen werden, welche ein Öffnen und ein darauffolgendes Schließen der Fahrertür erfassen. Das Verlassen kann auch daran erkannt werden, dass der Fahrer mit dem zumindest einen Sensor des Kraftfahrzeugs in der Umgebung des Kraftfahrzeugs erfasst wird. Mit diesem Sensor kann dann auch die Position des Fahrers fortlaufend ermittelt werden. Beispielsweise kann das Fahrerassistenzsystem beziehungsweise das Kraftfahrzeug einen ersten Sensor, mit dem die Parklücke erfasst wird, und einen zweiten Sensor, mit dem die Position des Fahrers erkannt wird, umfassen. Bei dem zweiten Sensor kann es sich beispielsweise um eine Kamera handeln, welche Bilder der Umgebung des Kraftfahrzeugs und insbesondere des Fahrers erfasst. Mithilfe eines entsprechenden Bildverarbeitungsprogramms kann dann der Fahrer und die aktuelle Position des Fahrers in den Bildern erkannt werden. Dabei wird überprüft, ob sich der Fahrer in dem vorbestimmten Blockierbereich befindet. Dieser Blockierbereich kann so bestimmt sein, dass sich dieser außerhalb eines Fahrschlauchs befindet, welcher von dem Kraftfahrzeug während des autonomen Einparkens überstrichen wird. Mit anderen Worten kann der Blockierbereich so bestimmt sein, dass sich der Fahrer nicht in der zukünftigen Bewegungsbahn des Kraftfahrzeugs befindet. Auf diese Weise kann der autonome Einparkvorgang sicher durchgeführt werden.

In einer Ausgestaltung wird der Blockierbereich derart vorbestimmt, dass der Fahrer in dem Blockierbereich eine Bewegung eines dem Kraftfahrzeug auf der Fahrbahn nachfolgenden Verkehrsteilnehmers blockiert. Dieser Blockierbereich kann sich insbesondere in Fahrtrichtung des Kraftfahrzeugs beziehungsweise in Vorwärtsfahrtrichtung hinter dem Kraftfahrzeug befinden. Der Blockierbereich kann sich in Vorwärtsfahrtrichtung des Kraftfahrzeugs vor der Parklücke und/oder zumindest bereichsweise seitlich neben der Parklücke befinden. Insbesondere ist der Blockierbereich derart bestimmt, dass der Fahrer, wenn er sich in dem Blockierbereich befindet, die Parklücke für die nachfolgenden Verkehrsteilnehmer blockieren kann. Somit kann der Fahrer, welcher sich in dem Blockierbereich auf der Fahrbahn befindet, verhindern, dass ein nachfolgender Verkehrsteilnehmer das Kraftfahrzeug während des autonomen Einparkmanövers blockiert. Dies eignet sich insbesondere in Ländern, in welchen das Blockieren der Parklücke durch den Fahrer erlaubt ist.

Nach der Erfindung wird eine Startposition bestimmt, ausgehend von welcher das Kraftfahrzeug autonom in die Parklücke eingeparkt wird, und das Ausstiegssignal wird ausgegeben, sobald die Startposition bestimmt ist. Neben dem Erkennen der Parklücke kann überprüft werden, ob eine geeignete Startposition für den autonomen Einparkvorgang vorhanden ist. Falls dies erfüllt ist, kann das Ausstiegssignal an den Fahrer des Kraftfahrzeugs ausgegeben werden. Somit kann das Ausstiegssignal dann ausgegeben werden, wenn mit hoher Wahrscheinlichkeit davon ausgegangen wird, dass das Kraftfahrzeug autonom in die Parklücke eingeparkt werden kann.

Weiterhin ist es vorteilhaft, wenn nachdem der Fahrer das Kraftfahrzeug verlassen hat, das Kraftfahrzeug zu der Startposition und von der Startposition zu einer Zielposition innerhalb der Parklücke autonom manövriert wird. Wenn der Fahrer an der Ausstiegsposition ausgestiegen ist, kann also das Kraftfahrzeug zunächst von der Ausstiegsposition zu der Startposition und anschließend von der Startposition zu einer Zielposition innerhalb der Parklücke manövriert werden. Dabei kann die Bewegung des Kraftfahrzeugs von der Ausstiegsposition zu der Startposition Teil des autonomen Einparkvorgangs sein. Dabei ist es insbesondere vorgesehen, dass das Kraftfahrzeug von der Ausstiegsposition zu der Startposition und von dort in die Parklücke manövriert wird, nachdem erkannt wurde, dass sich der Fahrer des Kraftfahrzeugs in dem vorbestimmten Blockierbereich befindet. Es kann auch vorgesehen sein, dass mit dem zumindest einen Sensor des Kraftfahrzeugs eine vorbestimmte Geste des Fahrers erkannt wird und das Kraftfahrzeug anschließend autonom in die Parklücke manövriert wird. Dabei kann es vorgesehen sein, dass während der Bewegung des Kraftfahrzeugs von der Ausstiegsposition zu der Startposition die Parklücke des Kraftfahrzeugs mithilfe des zumindest einen Sensors nochmals vermessen wird. Die Parklücke kann auch mit weiteren Sensoren des Kraftfahrzeugs, beispielsweise mit Ultraschallsensoren, nochmals vermessen werden. Es kann auch berücksichtigt werden, dass das Kraftfahrzeug mithilfe des zumindest einen Sensors während des Einparkvorgangs beziehungsweise während der Fahrt von der Startposition zu der Zielposition nochmals vermessen wird. Dies ermöglicht eine genauere Vermessung der Parklücke und eine Vermeidung einer Kollision mit Objekten, welche die Parklücke begrenzen.

Bevorzugt wird eine Bewegung des Kraftfahrzeugs während des autonomen Einparkens in Abhängigkeit von einer von dem Fahrer an einem mobilen Endgerät durchgeführten Bedieneingabe gesteuert. Mit anderen Worten kann das Kraftfahrzeug nach dem Aussteigen des Fahrers ferngesteuert in die Parklücke eingeparkt werden. Bei dem mobilen Endgerät kann es sich beispielsweise um ein Mobiltelefon, insbesondere ein Smartphone, oder einen Fahrzeugschlüssel handeln. Der Fahrer des Kraftfahrzeugs kann an dem mobilen Endgerät eine entsprechende Bedieneingabe durchführen, infolge derer der autonome Einparkvorgang gestartet wird. Es kann auch vorgesehen sein, dass während des autonomen Einparkvorgangs entsprechende Bedieneingaben von dem Fahrer durchgeführt werden. Beispielsweise kann infolge der Bedieneingabe eine Geschwindigkeit des Kraftfahrzeugs während des Einparkvorgangs gesteuert werden. Zudem kann die Bewegung des Kraftfahrzeugs angehalten werden, falls eine entsprechende Bedieneingabe unterbleibt. Hierzu kann das Fahrerassistenzsystem eine entsprechende Empfangseinheit aufweisen, mittels welcher von dem mobilen Endgerät Steuerdaten infolge der Bedieneingabe empfangen werden können. Somit kann der Fahrer des Kraftfahrzeugs auch nach dem Verlassen des Kraftfahrzeugs den autonomen Einparkvorgang kontrollieren.

In einer weiteren Ausführungsform ist die Parklücke eine Längsparklücke oder eine Querparklücke oder eine Schrägparklücke und das Kraftfahrzeug wird rückwärts in die Parklücke eingeparkt. Das beschriebene Verfahren eignet sich für unterschiedliche Ausgestaltungen von Parklücken. Insbesondere eignet sich das Verfahren, wenn das Kraftfahrzeug bei dem autonomen Einparkvorgang rückwärts in die Parklücke eingeparkt wird. Dabei kann es vorgesehen sein, dass das Kraftfahrzeug beim autonomen Einparken in einem ersten Einparkzug zunächst in Rückwärtsfahrtrichtung bewegt wird und bei zumindest einem weiteren Einparkzug vorwärts bewegt wird.

Ein erfindungsgemäßes Fahrerassistenzsystem ist zum Durchführen eines erfindungsgemäßen Verfahrens oder vorteilhaften Ausgestaltung des Verfahrens ausgelegt. Das Fahrerassistenzsystem kann ein elektronisches Steuergerät umfassen. Darüber hinaus kann das Fahrerassistenzsystem zumindest einen Sensor umfassen, welcher insbesondere als Laserscanner oder als Kamera ausgebildet ist. Das Fahrerassistenzsystem kann ferner eine Empfangseinheit umfassen, mittels welcher Steuersignale von dem mobilen Endgerät empfangen werden können.

Ein erfindungsgemäßes Kraftfahrzeug umfasst ein erfindungsgemäßes Fahrerassistenzsystem. Das Kraftfahrzeug ist insbesondere als Personenkraftwagen ausgebildet. Gemäß einer Ausführungsform gehört zu der Erfindung kann auch ein System, welches das Kraftfahrzeug und das mobile Endgerät umfasst.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2 bis 4: das Kraftfahrzeug beim autonomen Einparken in eine Längsparklücke zu unterschiedlichen Zeitpunkten; und
- Fig. 5 bis 7: das Kraftfahrzeug beim autonomen Einparken in eine Querparklücke zu unterschiedlichen Zeitpunkten.

In den Figuren werden gleiche und funktionsgleiche Elemente mit den gleichen Bezugszeichen versehen.

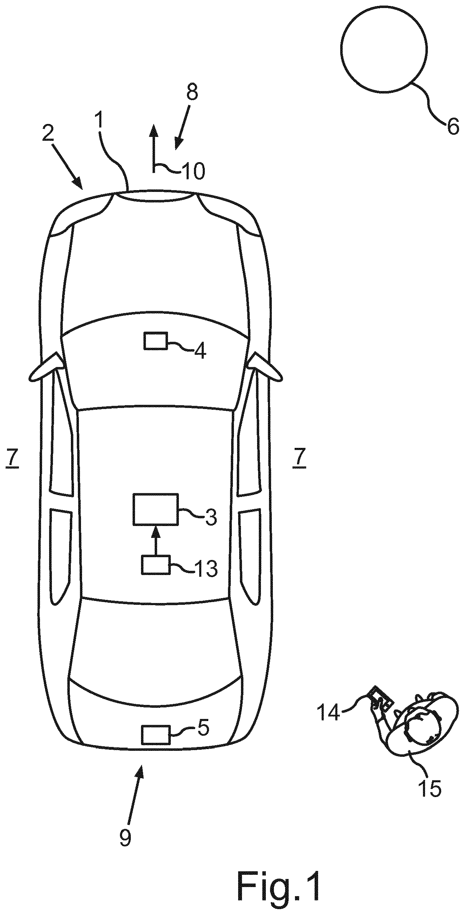

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches dazu dient, einen Fahrer 11 des Kraftfahrzeugs 1 beim Einparken zu unterstützen. Hierzu kann mit dem Fahrerassistenzsystem 2 ein autonomes Einparkmanöver durchgeführt werden.

Das Fahrerassistenzsystem 2 umfasst zumindest einen Sensor 4, 5, mit welchem Objekte 6 in einer Umgebung 7 des Kraftfahrzeugs 1 erfasst werden können. In dem vorliegenden Ausführungsbeispiel umfasst das Fahrerassistenzsystem 2 einen ersten Sensor 4, welcher beispielsweise als Laserscanner oder als Kamera ausgebildet sein kann. Der erste Sensor 4 ist so ausgebildet, dass mit diesem ein Bereich 8 der Umgebung 7 erfasst werden kann, welcher in Vorwärtsfahrtrichtung 10 vor dem Kraftfahrzeug 1 liegt. Darüber hinaus umfasst das Fahrerassistenzsystem 2 einen zweiten Sensor 5, welcher beispielsweise als Kamera ausgebildet ist. Mit dem zweiten Sensor 5 kann ein Bereich 9 der Umgebung 7 erfasst werden, welcher in Vorwärtsfahrtrichtung 10 hinter dem Kraftfahrzeug 1 liegt. Die Sensoren 4, 5 sind zur Datenübertragung mit einem elektronischen Steuergerät 3 des Fahrerassistenzsystems 2 verbunden. Entsprechende Datenleitungen sind vorliegend der Übersichtlichkeit halber nicht dargestellt. Mit den Sensoren 4, 5 können Sensordaten bereitgestellt werden, welche das zumindest eine Objekt 6 in der Umgebung 7 beschreiben. Die Sensordaten können dann mithilfe des Steuergeräts 3 entsprechend ausgewertet werden. Wenn es sich bei den Sensordaten um Bilddaten beziehungsweise Videodaten handelt, kann das Steuergerät 3 einen entsprechenden Bildverarbeitungsalgorithmus beziehungsweise Objekterkennungsalgorithmus verwenden, um das Objekt 6 zu erkennen.

Als Objekte 6 können mithilfe des Steuergeräts 3 beispielsweise Objekte erkannt werden, welche eine Parklücke 11 begrenzen. Somit können die räumlichen Abmessungen der Parklücke 11 bestimmt werden. Mit dem Steuergerät 3 kann damit zunächst ermittelt werden, ob die Parklücke 11 für das Kraftfahrzeug 1 zum Einparken geeignet ist. Mithilfe des Fahrerassistenzsystems 2 kann dann das Kraftfahrzeug 1 autonom in die Parklücke 11 eingeparkt werden. Hierzu kann mithilfe des Steuergeräts 3 zunächst eine Einparktrajektorie 12 bestimmt werden und das Kraftfahrzeug 1 anschließend entlang der Einparktrajektorie 12 manövriert werden.

Das Fahrerassistenzsystem 2 umfasst ferner eine Empfangseinheit 13, welche Steuersignale von einem mobilen Endgerät 14 empfangen kann. Das mobile Endgerät 14 wird vorliegend von einem Fahrer 15 des Kraftfahrzeugs 1 gehalten, welcher sich außerhalb des Kraftfahrzeugs 1 in der Umgebung 7 des Kraftfahrzeugs 1 befindet. Bei dem mobilen Endgerät 14 kann es sich beispielsweise um eine Smartphone oder um einen Fahrzeugschlüssel handeln. Der Fahrer 15 kann an dem mobilen Endgerät 15 eine entsprechende Bedieneingabe tätigen, infolge derer von dem mobilen Endgerät 14 Steuersignale erzeugt werden und drahtlos an die Empfangseinheit 13 übertragen werden. Infolge der empfangenen Steuersignale kann dann der autonome Einparkvorgang gestartet werden. Es kann auch erforderlich sein, dass während des autonomen Einparkens entsprechende Bedienhandlungen von dem Fahrer 15 an dem mobilen Endgerät 14 durchgeführt werden, um den Einparkvorgang zu steuern.

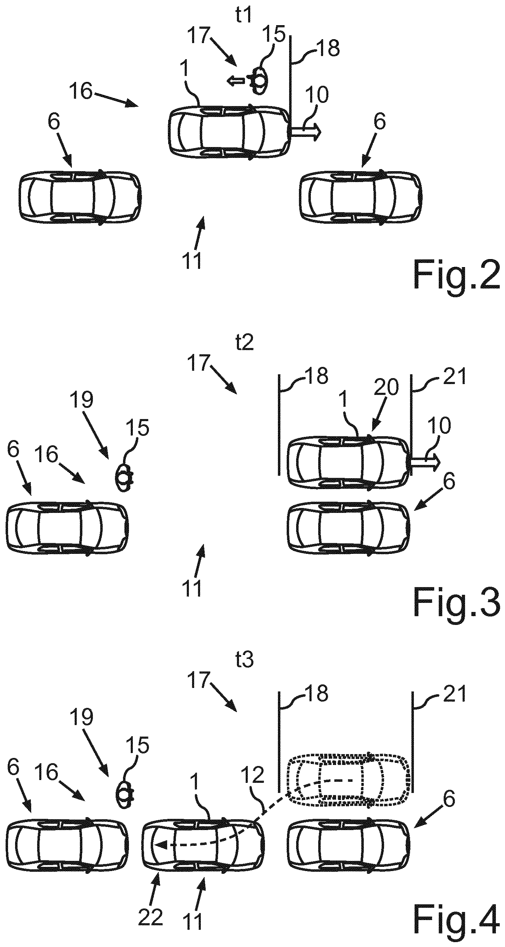

Fig. 2 zeigt das Kraftfahrzeug 1, welches in eine Parklücke 11 eingeparkt werden soll, zu einem ersten Zeitpunkt t1. Bei der Parklücke 11 handelt es sich dabei um eine Längsparklücke. Das Kraftfahrzeug 1 wird auf einer Fahrbahn 16 bewegt, welche an die Parklücke 11 angrenzt. Während der Bewegung des Kraftfahrzeugs 1 auf der Fahrbahn 16, bei welcher das Kraftfahrzeug 1 in Vorwärtsfahrtrichtung 10 bewegt wird, wird die Parklücke 11 beziehungsweise Objekte 6, welche die Parklücke 11 begrenzen, mithilfe des Sensors 4 erkannt. Vorliegend sind die Objekte 6, welche die Parklücke 11 begrenzen, Kraftfahrzeuge. Sobald die Parklücke 11 erkannt wird, wird an den Fahrer 15 des Kraftfahrzeugs 1 ein Ausstiegssignal ausgegeben. Zu diesem Zweck kann das Fahrerassistenzsystem 2 eine entsprechende Ausgabeeinrichtung, beispielsweise einen Bildschirm und/oder einen Lautsprecher, aufweisen. Dieses Ausstiegssignal weist den Fahrer 15 darauf hin, dass ein Aussteigen aus dem Kraftfahrzeug 1 möglich ist. Nach dem Ausgeben des Ausstiegssignals kann der Fahrer 15 beispielsweise eine entsprechende Bedieneingabe tätigen, infolge der die Bewegung des Kraftfahrzeugs 1 an einer Ausstiegsposition 17 angehalten wird. Das Fahrerassistenzsystem 2 kann das Kraftfahrzeug 1 auch autonom an der Ausstiegsposition 17 anhalten.

Fig. 2 zeigt dabei das Kraftfahrzeug 1, welches sich zu dem ersten Zeitpunkt t1 an der Ausstiegsposition 17 befindet. Dabei zeigt die Linie 18 die Position der Front des Kraftfahrzeugs 1, wenn sich das Kraftfahrzeug 1 an der Ausstiegsposition 17 befindet. Die Ausstiegsposition 17 kann grundsätzlich derart bestimmt sein, dass sich diese in Vorwärtsfahrtrichtung 10 vor oder neben der Parklücke 11 befindet. Vorliegend befindet sich die Ausstiegsposition 17 seitlich neben der Parklücke 11 auf der Fahrbahn 16. Wenn sich das Kraftfahrzeug 1 an der Ausstiegsposition 17 befindet, kann der Fahrer 15 das Kraftfahrzeug 1 verlassen beziehungsweise aussteigen.

Fig. 3 zeigt den Einparkvorgang gemäß Fig. 2 zu einem auf den ersten Zeitpunkt t1 folgenden, zweiten Zeitpunkt t2. Hierbei befindet sich der Fahrer 15 in einem vorbestimmten Blockierbereich 19 auf der Fahrbahn 16. Dieser Blockierbereich 19 ist so bestimmt, dass der Fahrer, wenn er sich in dem Blockierbereich 19 befindet, die Parklücke 11 für nachfolgende Verkehrsteilnehmer blockieren kann. Der Fahrer 15 kann also die nachfolgenden Verkehrsteilnehmer davon abhalten, in die Parklücke 11 einzufahren oder das Kraftfahrzeug 1 während des autonomen Einparkvorgangs zu behindern. Vorliegend befindet sich der Fahrer in einem Blockierbereich 19, welcher in Vorwärtsfahrtrichtung 10 hinter der Parklücke 11 angeordnet ist.

Mithilfe des zweiten Sensors 5 kann nach dem Aussteigen des Fahrers 15 aus dem Kraftfahrzeug 1 überprüft werden, ob sich der Fahrer 15 in dem vorbestimmten Blockierbereich 19 befindet. Falls auf Grundlage der Sensordaten, die mit dem zweiten Sensor 5 bereitgestellt werden, erkannt wird, dass sich der Fahrer 15 in dem Blockierbereich 19 befindet, wird das Kraftfahrzeug 1 autonom von der Ausstiegsposition 17 in eine Startposition 20 bewegt. Die Startposition 20 stellt den Ausgangspunkt für das autonome Einparkmanöver in die Parklücke 11 dar. Dabei beschreibt die Linie 21 die Position der Front des Kraftfahrzeugs 1, wenn sich dieses an der Startposition 20 befindet.

Fig. 4 zeigt den Einparkvorgang zu einem auf den zweiten Zeitpunkt t2 folgenden, dritten Zeitpunkt t3. Hierbei wird das Kraftfahrzeug 1 entlang der Einparktrajektorie 12 von der Startposition 20 zu einer Zielposition 22 innerhalb der Parklücke 11 manövriert. Während des autonomen Einparkvorgangs kann der Fahrer 15 durch entsprechende Bedieneingaben an dem mobilen Endgerät 14 den Einparkvorgang beziehungsweise die Bewegung des Kraftfahrzeugs 1 steuern.

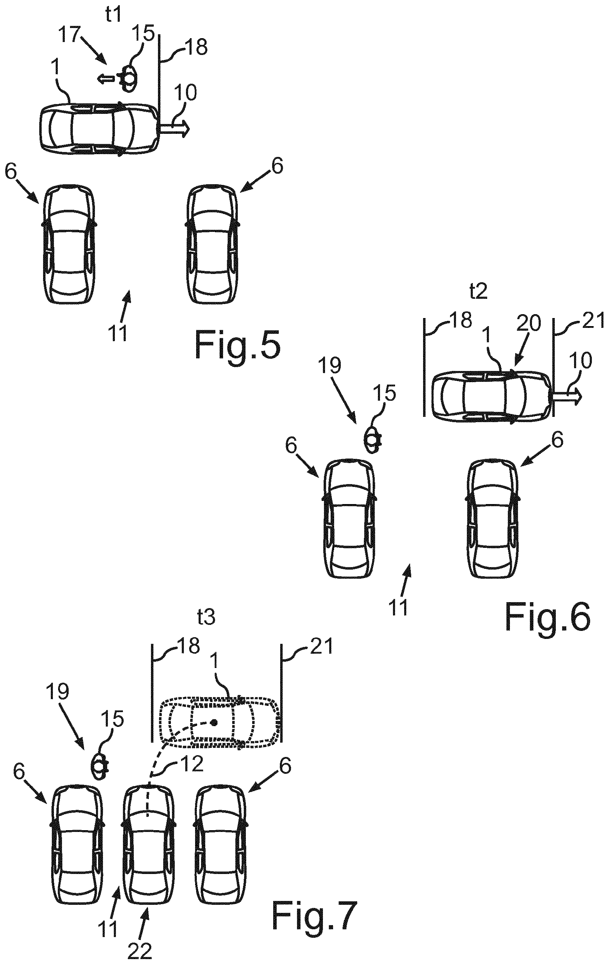

Die Fig. 5 bis 7 beschreiben analog zu den Fig. 2 bis 4 einen autonomen Einparkvorgang, bei welchem das Kraftfahrzeug 1 rückwärts in eine Parklücke 11 eingeparkt wird, welche als Querparklücke ausgebildet ist. Dabei zeigt Fig. 5 einen ersten Zeitpunkt t1, bei dem sich das Kraftfahrzeug 1 an der Ausstiegsposition 17 befindet. Fig. 6 zeigt einen zweiten Zeitpunkt t2, bei welchem sich der Fahrer 15 in dem Blockierbereich 19 befindet und das Kraftfahrzeug 1 in die Startposition 20 bewegt wurde. Schließlich zeigt Fig. 7 den Einparkvorgang zu einem dritten Zeitpunkt t3, bei welchem das Kraftfahrzeug 1 rückwärts entlang der Einparktrajektorie 12 in die Querparklücke manövriert wurde.

## Patentansprüche

1. Verfahren zum autonomen Einparken eines Kraftfahrzeugs (1) in eine Parklücke (11), bei welchem während das Kraftfahrzeug (1) auf einer an die Parklücke (11) angrenzenden Fahrbahn (16) in Richtung der Parklücke (11) bewegt wird, anhand von Sensordaten zumindest eines Sensors (4, 5) des Kraftfahrzeugs (1) die Parklücke (11) erkannt wird und das Kraftfahrzeug (1) autonom in die Parklücke (11) eingeparkt wird, nachdem ein Fahrer (15) des Kraftfahrzeugs (1) das Kraftfahrzeug (1) verlassen hat,
wobei mit dem zumindest einen Sensor (4, 5) die Parklücke (11) in Vorwärtsfahrtrichtung (10) vordem Kraftfahrzeug (1) erkannt wird und sobald die Parklücke (1) erkannt ist, ein Ausstiegssignal an den Fahrer (15) des Kraftfahrzeugs (1) ausgeben wird, welches dem Fahrer (15) anzeigt, dass das Verlassen des Kraftfahrzeugs (1) möglich ist
**dadurch gekennzeichnet, dass**
eine Startposition (20) bestimmt wird, ausgehend von welcher das Kraftfahrzeug (1) autonom in die Parklücke (11) eingeparkt wird, und das Ausstiegssignal ausgegeben wird, sobald die Startposition (20) bestimmt ist.

2. Verfahren nach Anspruch 1,
**dadurch gekennzeichnet, dass**
das Kraftfahrzeug (1) an einer Ausstiegsposition (15) zum Verlassen angehalten wird, wobei sich die Ausstiegsposition auf der Fahrbahn (16) und in Vorwärtsfahrtrichtung (10) des Kraftfahrzeugs (1) vor der Parklücke (11) und/oder seitlich neben der Parklücke (11) befindet.

3. Verfahren nach Anspruch 1 oder 2,
**dadurch gekennzeichnet, dass**
nachdem der Fahrer (15) das Kraftfahrzeug (1) verlassen hat, eine Position des Fahrers (15) erfasst wird und das Kraftfahrzeug (1) autonom in die Parklücke (11) eingeparkt wird, falls sich die Position des Fahrers (15) in einem vorbestimmten Blockierbereich (19) auf der Fahrbahn (16) befindet.

4. Verfahren nach Anspruch 3,
**dadurch gekennzeichnet, dass**
der Blockierbereich (19) derart vorbestimmt wird, dass der Fahrer (15) in dem Blockierbereich (19) eine Bewegung eines dem Kraftfahrzeug (1) auf der Fahrbahn (16) nachfolgenden Verkehrsteilnehmers blockiert.

5. Verfahren nach Anspruch 1,
**dadurch gekennzeichnet, dass**
nachdem der Fahrer (15) das Kraftfahrzeug (1) verlassen hat, das Kraftfahrzeug (1) zu der Startposition (20) und anschließend von der Startposition (20) zu einer Zielposition (22) innerhalb der Parklücke (11) autonom manövriert wird.

6. Verfahren nach einem der vorhergehenden Ansprüche,
**dadurch gekennzeichnet, dass**
eine Bewegung des Kraftfahrzeugs (1) während des autonomen Einparkens in Abhängigkeit von einer von dem Fahrer (15) an einem mobilen Endgerät (14) durchgeführten Bedieneingabe gesteuert wird.

7. Verfahren nach einem der vorhergehenden Ansprüche,
**dadurch gekennzeichnet, dass**
die Parklücke (11) eine Längsparklücke oder einer Querparklücke oder eine Schrägparklücke ist und das Kraftfahrzeug (1) rückwärts in die Parklücke (11) eingeparkt wird.

8. Fahrerassistenzsystem (2) für ein Kraftfahrzeug (1), welches zum Durchführen eines Verfahrens nach einem der vorhergehenden Ansprüche ausgelegt ist.

9. Kraftfahrzeug (1) mit einem Fahrerassistenzsystem (2) nach Anspruch 8.

## Claims

1. Method for autonomously parking a motor vehicle (1) into a parking space (11), in which while the motor vehicle (1) is moved in the direction of the parking space (11) on a roadway (16) adjoining the parking space (11), the parking space (11) is detected on the basis of sensor data of at least one sensor (4, 5) of the motor vehicle (1), and the motor vehicle (1) is parked autonomously into the parking space (11) after a driver (15) of the motor vehicle (1) has exited the motor vehicle (1),
wherein with the at least one sensor (4, 5) the parking space (11) is detected in front of the motor vehicle (1) in the forward travel direction (10) and as soon as the parking space (1) is detected an exit signal is output to the driver (15) of the motor vehicle (1), which exit signal indicates to the driver (15) that it is possible to exit the vehicle (1),
**characterized in that**
a starting position (20) is determined, starting from which the motor vehicle (1) is parked autonomously into the parking space (11), and the exit signal is output as soon as the starting position (20) is determined.

2. Method according to Claim 1,
**characterized in that**
the motor vehicle (1) is stopped at an exit position (15) for exiting, wherein the exit position is located on the roadway (16) and in front of the parking space (11) in the forward travel direction (10) of the motor vehicle (1) and/or laterally next to the motor vehicle (11).

3. Method according to Claim 1 or 2,
**characterized in that**
after the driver (15) has exited the motor vehicle (1), a position of the driver (15) is sensed, and the motor vehicle (1) is parked autonomously into the parking space (11) if the position of the driver (15) is located in a predetermined blocking region (19) on the roadway (16).

4. Method according to Claim 3,
**characterized in that**
the blocking region (19) is predetermined in such a way that in the blocking region (19) the driver (15) blocks a movement of a road user who is following the motor vehicle (1) on the roadway (16).

5. Method according to Claim 1,
**characterized in that**
after the driver (15) has exited the motor vehicle (1), the motor vehicle (1) is manoeuvred autonomously to the starting position (20) and subsequently from the starting position (20) to a target position (22) within the parking space (11).

6. Method according to one of the preceding claims,
**characterized in that**
a movement of the motor vehicle (1) during the autonomous parking is controlled as a function of an operator control input which is carried out by the driver (15) on a mobile terminal (14).

7. Method according to one of the preceding claims,
**characterized in that**
the parking space (11) is a longitudinal parking space or a transverse parking space or an oblique parking space, and the motor vehicle (1) is parked rearwards into the parking space (11).

8. Driver assistance system (2) for a motor vehicle (1), which driver assistance system (2) is configured to carry out a method according to one of the preceding claims.

9. Motor vehicle (1) having a driver assistance system (2) according to Claim 8.

## Revendications

1. Procédé pour le stationnement automatique d'un véhicule automobile (1) sur une place de stationnement (11), dans lequel, pendant que l'on déplace le véhicule sur une chaussée (16) adjacente à la place de stationnement (11) en direction de la place de stationnement (11), on identifie la place de stationnement (11) à l'aide de données de capteur d'au moins un capteur (4, 5) du véhicule automobile (1) et on stationne le véhicule automobile (1) de façon automatique dans la place de stationnement (11), après qu'un conducteur (15) du véhicule automobile (1) ait quitté le véhicule automobile (1),
dans lequel on identifie avec ledit au moins un capteur (4, 5) la place de stationnement (11) devant le véhicule automobile (1) dans la direction de marche avant (10) et dès que la place de stationnement (11) a été identifiée, on envoie au conducteur (15) du véhicule automobile un signal de sortie, qui indique au conducteur (15) qu'il peut quitter le véhicule automobile (1),
**caractérisé en ce que** l'on détermine une position initiale (20), à partir de laquelle on stationne le véhicule automobile (1) de façon automatique dans la place de stationnement (11), et on envoie le signal de sortie, dès que la position initiale (20) est déterminée.

2. Procédé selon la revendication 1, **caractérisé en ce que** l'on immobilise le véhicule automobile (1) à une position de sortie (15) pour la sortie, dans lequel la position de sortie se trouve sur la chaussée (16) et devant la place de stationnement (11) dans la direction de marche avant (10) du véhicule automobile (1) et/ou latéralement à côté de la place de stationnement (11).

3. Procédé selon une revendication 1 ou 2, **caractérisé en ce qu'**après que le conducteur (15) ait quitté le véhicule automobile (1), on détecte une position du conducteur (15) et on stationne le véhicule automobile (1) de façon automatique dans la place de stationnement (11), dans le cas où la position du conducteur (15) se trouve dans une zone de blocage prédéterminée (19) sur la chaussée (16).

4. Procédé selon la revendication 3, **caractérisé en ce que** l'on prédétermine la zone de blocage (19), de telle manière que le conducteur (15) bloque dans la zone de blocage (19) un mouvement d'un autre usager suivant le véhicule automobile (1) sur la chaussée (16).

5. Procédé selon la revendication 1, **caractérisé en ce qu'**après que le conducteur (15) ait quitté le véhicule automobile (1), on manoeuvre de façon automatique le véhicule automobile (1) vers la position initiale (20) et ensuite de la position initiale (20) à une position visée (22) à l'intérieur de la place de stationnement (11) .

6. Procédé selon l'une quelconque des revendications précédentes, **caractérisé en ce que** l'on commande un mouvement du véhicule automobile (1) pendant le stationnement automatique en fonction d'une instruction de commande exécutée par le conducteur (15) sur un appareil terminal mobile (14).

7. Procédé selon l'une quelconque des revendications précédentes, **caractérisé en ce que** la place de stationnement (11) est une place de stationnement longitudinale ou une place de stationnement transversale ou une place de stationnement oblique et on stationne le véhicule automobile (1) en marche arrière dans la place de stationnement (11).

8. Système d'assistance du conducteur (2) pour un véhicule automobile (1), qui est conçu pour l'exécution d'un procédé selon l'une quelconque des revendications précédentes.

9. Véhicule automobile (1) avec un système d'assistance du conducteur (2) selon la revendication 8.
